# EUROPEAN PATENT APPLICATION

(11) **EP 4 358 056 A1**
(43) Date of publication of application: **24.04.2024**
(21) Application number: 23190814.6
(22) Date of filing: 10.08.2023
(51) Int. Cl.: G08G 1/01

(54) **METHOD FOR DETERMINING UPLOAD FREQUENCY AND PROGRAM THEREOF**

(30) Priority: 21.10.2022 JP 2022169184
(71) Applicant: FUJITSU LIMITED, Kawasaki-shi, Kanagawa 211-8588 (JP)
(72) Inventor: Zhang, Jiachao, Kawasaki-shi, Kanagawa, 211-8588 (JP); Yamaoka, Hisatoshi, Kawasaki-shi, Kanagawa, 211-8588 (JP); Okabayashi, Miwa, Kawasaki-shi, Kanagawa, 211-8588 (JP)
(74) Representative: Hoffmann Eitle

(57) **Abstract**

A method for determining an upload frequency includes calculating for each area, by a computer, a counted number of routes for routes identified based on route search requests received for a predetermined period in past, and determining an upload frequency of uploading vehicle information from a terminal associated with a vehicle in each area in accordance with the counted number of routes for each area.

## Description

### FIELD

The embodiment discussed herein is related to a method for determining an upload frequency and a program thereof.

### BACKGROUND

A technology for monitoring an amount of data of collected vehicle information per unit of area and reducing the amount of data of vehicle information to be collected for each area in accordance with the amount of data of collected vehicle information has been known.

Japanese Laid-open Patent Publication No. 2019-79422, International Publication Pamphlet No. WO 2017/037784, and Japanese Laid-open Patent Publication No. 2020-38362 are disclosed as related art.

### PROBLEMS

An area where the amount of data of collected vehicle information is large indicates an area where a traffic volume is large and a traffic demand is large. However, in the technology of the related art described above, the amount of data of vehicle information to be collected is reduced in the area where the amount of data of collected vehicle information is large. Thus, in a case where a congestion status is estimated by using the vehicle information, there is a possibility that accuracy of the estimation decreases even in the area where the traffic demand is large.

According to one aspect, an object of the present disclosure is to improve accuracy of estimating a congestion status in an area where a traffic demand is large.

### SUMMARY

According to an aspect of the embodiment, a method for determining an upload frequency includes calculating for each area, by a computer, a counted number of routes for routes identified based on route search requests received for a predetermined period in past, and determining an upload frequency of uploading vehicle information from a terminal associated with a vehicle in each area in accordance with the counted number of routes for each area.

### EFFECTS OF INVENTION

Accordingly, the accuracy of estimating the congestion status in the area where the traffic demand is large may be improved.

### BRIEF DESCRIPTION OF DRAWINGS

FIG. 1 is a diagram illustrating an example of a system configuration of an information processing system;
FIG. 2 is a diagram illustrating an example of a hardware configuration of an information processing apparatus;
FIG. 3 is a diagram illustrating a functional configuration of the information processing apparatus;
FIG. 4 is a diagram for describing a distribution of traffic demands of the present embodiment;
FIG. 5 is a first flowchart illustrating processing of the information processing apparatus;
FIG. 6 is a second flowchart illustrating the processing of the information processing apparatus; and
FIG. 7 is a third flowchart illustrating the processing of the information processing apparatus.

### DESCRIPTION OF EMBODIMENT

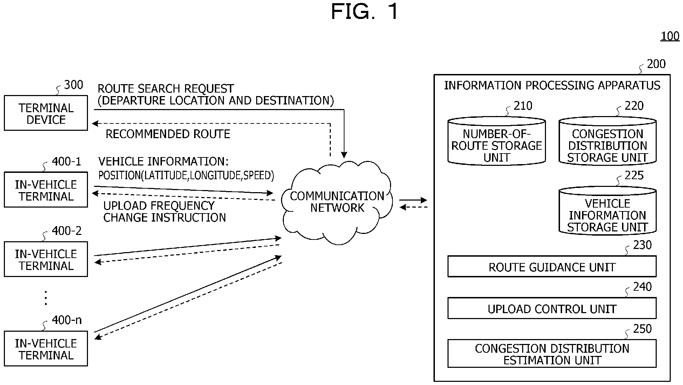

Hereinafter, an embodiment will be described with reference to the drawings. FIG. 1 is a diagram illustrating an example of a system configuration of an information processing system.

An information processing system 100 of the present embodiment includes an information processing apparatus 200, a terminal device 300, and in-vehicle terminals 400-1, 400-2, ..., and 400-n. The in-vehicle terminals 400-1, 400-2, ..., and 400-n are referred to as in-vehicle terminals 400 in a case where these in-vehicle terminals are not distinguished from each other.

The information processing apparatus 200, the terminal device 300, and the in-vehicle terminals 400 are coupled to each other via a network such as the Internet.

Upon receiving a search request for a route (hereinafter, referred to as a route search request) including a departure location and a destination from the terminal device 300, the information processing apparatus 200 of the present embodiment extracts an optimum route from the departure location to the destination and outputs the optimum route to the terminal device 300. The optimum route according to the present embodiment is a route along which a time to arrive at the destination from the departure location is a shortest time.

The terminal device 300 is a terminal device held by a user of the information processing system 100 of the present embodiment, and may be, for example, a smartphone, a car navigation device mounted on a vehicle, or the like. For example, the terminal device 300 may include the in-vehicle terminal 400.

The in-vehicle terminal 400 is a terminal mounted on a vehicle, and periodically uploads vehicle information on the vehicle to the information processing apparatus 200. For example, the vehicle information includes positional information indicating a position of the vehicle and speed information indicating a speed of the vehicle. For example, the vehicle information is latitude and longitude indicating the position of the vehicle and the speed of the vehicle.

The information processing apparatus 200 of the present embodiment includes a number-of-route storage unit 210, a congestion distribution storage unit 220, a vehicle information storage unit 225, a route guidance unit 230, an upload control unit 240, and a congestion distribution estimation unit 250.

The number-of-route storage unit 210 stores number-of-route information indicating the number of routes presented to a user who has made a route search request. Information indicating the number of routes is stored for each area. The congestion distribution storage unit 220 stores congestion distribution information indicating a congestion status of a road in an area for each area. Pieces of vehicle information collected from the in-vehicle terminals 400 are stored in the vehicle information storage unit 225 for each area.

Upon receiving the route search request from the terminal device 300, the route guidance unit 230 extracts the optimum route while referring to the congestion distribution storage unit 220, outputs the optimum route to the terminal device 300, and updates the number-of-route storage unit 210.

The upload control unit 240 estimates the magnitude of traffic demand of each area based on the number of routes for each area. The estimation of the magnitude of the traffic demand may be periodically performed or may be performed whenever a route is presented in response to a new route search request.

The upload control unit 240 determines an upload frequency of the vehicle information from the in-vehicle terminal 400 for each area in accordance with the magnitude of the traffic demand of each area, and notifies the in-vehicle terminal 400 in each area of the upload frequency of the vehicle information.

For example, the upload control unit 240 increases the upload frequency from the in-vehicle terminal 400 in an area where the traffic demand is regarded as being large and decreases the upload frequency from the in-vehicle terminal 400 in an area where the traffic demand is regarded as being small.

The upload control unit 240 determines the frequency of performing estimation processing of the congestion status by the congestion distribution estimation unit 250 in accordance with the magnitude of the traffic demand of each area, and notifies the congestion distribution estimation unit 250 of the determined frequency. In the following description, there may be a case where the magnitude of the traffic demand of each area is referred to as a distribution of traffic demands.

For each area, the congestion distribution estimation unit 250 calculates the congestion status of the road in the area at the frequency notified by the upload control unit 240.

In the present embodiment, as described above, the upload frequency of the vehicle information is different between the area where the traffic demand is large and the area where the traffic demand is small. For example, in the present embodiment, the upload frequency of vehicle information from the in-vehicle terminal 400 is determined for each area in accordance with the distribution of traffic demands.

Thus, in the present embodiment, as an area has a larger traffic demand, a larger amount of vehicle information is uploaded. The accuracy of estimation of a degree of congestion of the area where the traffic demand is large may be improved while a communication load of the information processing apparatus 200 is reduced.

In the present embodiment, as an area have a larger traffic demand, the congestion status of the road in the area is more frequently estimated. The frequency of estimating the congestion status of the area where the traffic demand is small becomes low.

Thus, in the present embodiment, a processing load for estimating the congestion status in the information processing apparatus 200 may be reduced. According to the present embodiment, as an area has a larger traffic demand, a latest congestion status may be reflected in the route presented to the user.

Although the information processing apparatus 200 includes the number-of-route storage unit 210, the congestion distribution storage unit 220, and the vehicle information storage unit 225 in FIG. 1, the present embodiment is not limited thereto. A part or all of the number-of-route storage unit 210, the congestion distribution storage unit 220, and the vehicle information storage unit 225 may be provided in an external device capable of communicating with the information processing apparatus 200.

The information processing apparatus 200 may be implemented by a plurality of information processing apparatuses. For example, the route guidance unit 230, the upload control unit 240, and the congestion distribution estimation unit 250 may be implemented by a plurality of information processing apparatuses.

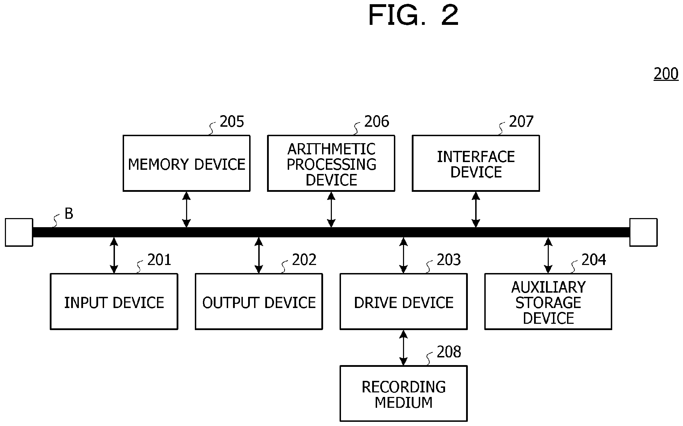

Hereinafter, the information processing apparatus 200 of the present embodiment will be described with reference to FIG. 2. FIG. 2 is a diagram illustrating an example of a hardware configuration of the information processing apparatus.

The information processing apparatus 200 of the present embodiment is a computer including an input device 201, an output device 202, a drive device 203, an auxiliary storage device 204, a memory device 205, an arithmetic processing device 206, and an interface device 207, which are coupled to each other via a bus B.

The input device 201 is a device used for inputting various kinds of information, and is implemented by, for example, a keyboard, a pointing device, or the like. The output device 202 is used for outputting various kinds of information, and is implemented by, for example, a display or the like. The interface device 207 includes a local area network (LAN) card or the like, and is used for being coupled to a network.

A program for implementing the route guidance unit 230, the upload control unit 240, and the congestion distribution estimation unit 250 included in the information processing apparatus 200 is at least a part of various programs for controlling the information processing apparatus 200. For example, the program is provided through distribution of a recording medium 208, download from the network, or the like. Various types of recording media such as a recording medium on which information is optically, electrically, or magnetically recorded, for example, a compact disc read-only memory (CD-ROM), a flexible disk, a magneto-optical disc, or the like, and a semiconductor memory or the like in which information is electrically recorded, for example, a read-only memory (ROM), a flash memory, or the like may be used as the recording medium 208 on which the program is recorded.

The program recorded in the recording medium 208 is installed in the auxiliary storage device 204 from the recording medium 208 through the drive device 203 when the recording medium 208 in which the program is recorded is set in the drive device 203. The program downloaded from the network is installed in the auxiliary storage device 204 through the interface device 207.

The auxiliary storage device 204 implements the number-of-route storage unit 210, the congestion distribution storage unit 220, the vehicle information storage unit 225, and the like included in the information processing apparatus 200, stores the program installed in the information processing apparatus 200, and stores various desired files, data, and the like used by the information processing apparatus 200. At the start of the information processing apparatus 200, the memory device 205 reads the program from the auxiliary storage device 204 and stores the program. According to the program stored in the memory device 205, the arithmetic processing device 206 implements various kinds of processing to be described later.

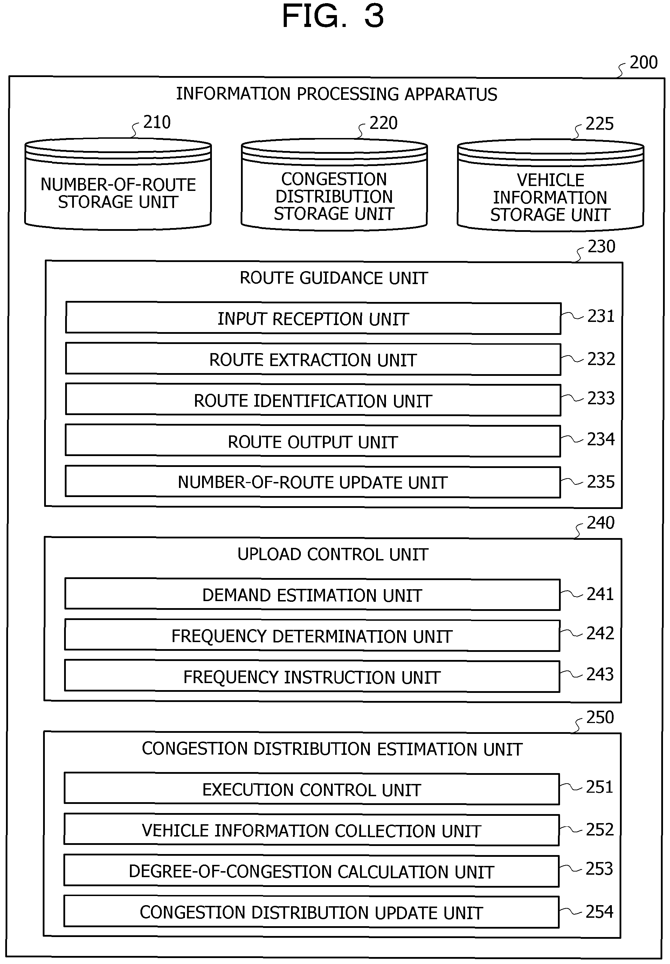

Next, a functional configuration of the information processing apparatus 200 of the present embodiment will be described with reference to FIG. 3. FIG. 3 is a diagram illustrating the functional configuration of the information processing apparatus.

The information processing apparatus 200 of the present embodiment includes the number-of-route storage unit 210, the congestion distribution storage unit 220, the vehicle information storage unit 225, the route guidance unit 230, the upload control unit 240, and the congestion distribution estimation unit 250.

The number-of-route storage unit 210 stores, as a search result by the route guidance unit 230, a result obtained by counting the number of routes output to the terminal device 300 for each area. For example, the number-of-route storage unit 210 may store number-of-route information in which area identification information for identifying an area and the number of routes counted for each area are associated with each other.

The congestion distribution storage unit 220 stores congestion distribution information indicating the congestion status of the road for each area estimated by the congestion distribution estimation unit 250. For example, the congestion distribution information may be information in which identification information for identifying a section of the road, a degree of congestion estimated for each section of the road, and area identification information for identifying an area are associated with each other.

The vehicle information collected from the in-vehicle terminal 400 is stored in the vehicle information storage unit 225 for each area. The area identification information of the area identified from the positional information included in the vehicle information and the vehicle information may be stored in the vehicle information storage unit 225 in association with each other.

The route guidance unit 230 includes an input reception unit 231, a route extraction unit 232, a route identification unit 233, a route output unit 234, and a number-of-route update unit 235.

For example, the input reception unit 231 receives the route search request from the terminal device 300. The input reception unit 231 receives various inputs to the information processing apparatus 200. The departure location and the destination are included in the route search request.

When the route search request is input, the route extraction unit 232 extracts routes that link the departure location and the destination. The route extraction unit 232 may extract the routes while referring to a map information database (not illustrated) or the like. For example, the map information database may be provided over the Internet or may be included in the information processing apparatus 200.

The route identification unit 233 identifies the optimum route from the routes extracted by the route extraction unit 232 while referring to the congestion distribution storage unit 220. For example, the route identification unit 233 identifies a route along which the time to arrive at the destination from the departure location is shortest, based on the congestion distribution information stored in the congestion distribution storage unit 220.

The route output unit 234 outputs the route identified by the route identification unit 233 to the terminal device 300 that is an input source of the route search request. The input source of the route search request may be the in-vehicle terminal 400.

Whenever the route is output to the terminal device 300, the number-of-route update unit 235 updates the number-of-route storage unit 210.

The upload control unit 240 of the present embodiment includes a demand estimation unit 241, a frequency determination unit 242, and a frequency instruction unit 243.

The demand estimation unit 241 estimates the magnitude of the traffic demand for each area while referring to the number-of-route storage unit 210. For example, the demand estimation unit 241 estimates the distribution of traffic demands while referring to the number-of-route storage unit 210.

In accordance with the distribution of traffic demands estimated by the demand estimation unit 241, the frequency determination unit 242 determines the upload frequency of the vehicle information from the in-vehicle terminal 400 in each area. The frequency determination unit 242 determines an estimation frequency of the congestion status of the road in each area in accordance with the distribution of traffic demands estimated by the demand estimation unit 241.

The frequency instruction unit 243 notifies the in-vehicle terminal 400 of the upload frequency determined by the frequency determination unit 242. The frequency instruction unit 243 notifies the congestion distribution estimation unit 250 of the estimation frequency determined by the frequency determination unit 242.

Details of processing of the upload control unit 240 will be described later.

The congestion distribution estimation unit 250 includes an execution control unit 251, a vehicle information collection unit 252, a degree-of-congestion calculation unit 253, and a congestion distribution update unit 254.

The execution control unit 251 controls the execution of the processing in accordance with the frequency notified by the upload control unit 240. The vehicle information collection unit 252 collects the vehicle information uploaded from the in-vehicle terminal 400, and stores the vehicle information in the vehicle information storage unit 225.

The degree-of-congestion calculation unit 253 calculates, for each area, a degree of congestion for each section of the road in the area in accordance with an execution instruction by the execution control unit 251. For example, the degree-of-congestion calculation unit 253 may set, as the degree of congestion of each section, a result obtained by counting the number of vehicles present in the section for each section of the road while referring to the vehicle information storage unit 225. The road is divided into a plurality of sections in advance over a map, and is associated with information identifying the road and the section.

The congestion distribution update unit 254 updates the congestion distribution storage unit 220 based on the degree of congestion calculated by the degree-of-congestion calculation unit 253.

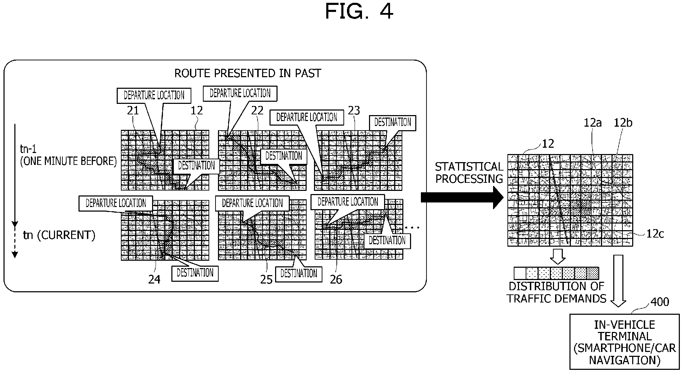

Hereinafter, the distribution of traffic demands of the present embodiment will be further described with reference to FIG. 4. FIG. 4 is a diagram for describing the distribution of traffic demands of the present embodiment.

Generally, in a case where the route that is the search result is presented to the user, the presented route is considered to be a route along which the user passes in the near future.

Thus, an area including a route that is presented to users a large number of times is an area where many users will pass in the near future, and may be referred to as an area where the traffic demand is large.

By contrast, an area including a route that is presented to users a small number of times is an area where a small number of people pass in the near future, and may be referred to as an area where the traffic demand is small.

Focusing on this point, in the present embodiment, for each area divided in advance in the map, the routes presented to the user as the search results are counted in a predetermined period in the past, and the distribution of traffic demands in each area is calculated in accordance with the counting result. The predetermined period in the past may be, for example, one minute or the like.

In the example illustrated in FIG. 4, routes 21, 22, 23, 24, 25, and 26 are presented in response to the route search request from users in a predetermined period in the past in a certain region 12.

In this case, the demand estimation unit 241 of the upload control unit 240 estimates an area including the largest number of routes among six routes as an area where the traffic demand is the largest.

In the present embodiment, as described above, the number of routes included in each area is counted for each area, and the upload frequency of the vehicle information for each area and the estimation frequency of the congestion status for each area are determined in accordance with the number of routes.

In the example illustrated in FIG. 4, six level thresholds are provided for the counted number of routes, and an area where the number of routes included in the area is equal to or greater than a threshold having a largest value among the six level thresholds is set as the area where the traffic demand is the largest.

In the example illustrated in FIG. 4, an area where the number of routes included in the area is equal to or smaller than a smallest threshold among the six thresholds is set as the area where the traffic demand is the smallest.

Accordingly, in the example illustrated in FIG. 4, an area 12a is estimated to have a largest traffic demand, an area 12c is estimated to have a smallest traffic demand, and an area 12b is estimated to have an intermediate traffic demand.

The upload control unit 240 of the present embodiment determines the upload frequency of the vehicle information from the in-vehicle terminal 400 present in each area in accordance with the magnitude of the traffic demand for each area estimated in this manner.

For example, the frequency determination unit 242 of the upload control unit 240 may divide the upload frequency into, for example, seven levels in which the number of routes included in the area corresponds to the six level thresholds, and may set the upload frequency for each area.

In the example of FIG. 4, an upload frequency of the area 12a estimated to have the largest traffic demand becomes the highest, and an upload frequency of the area 12c estimated to have the smallest traffic demand becomes the lowest.

The upload control unit 240 of the present embodiment determines the estimation frequency for estimating the congestion status in each area in accordance with the magnitude of the traffic demand for each area. For example, the frequency determination unit 242 of the upload control unit 240 may divide the estimation frequency into, for example, seven levels in which the number of routes included in the area corresponds to the six level thresholds, and may set the estimation frequency for each area.

The frequency determination unit 242 may set the estimation frequency such that the congestion status is estimated at a timing when the vehicle information is uploaded. For example, the frequency determination unit 242 may determine the estimation frequency for each area such that the congestion status is estimated in accordance with the upload of the vehicle information.

The level of the threshold set for the number of routes, the level of the upload frequency, and the level of the estimation frequency in FIG. 4 are examples and are not limited thereto, and may be arbitrarily changed by an administrator of the information processing system 100 of the present embodiment.

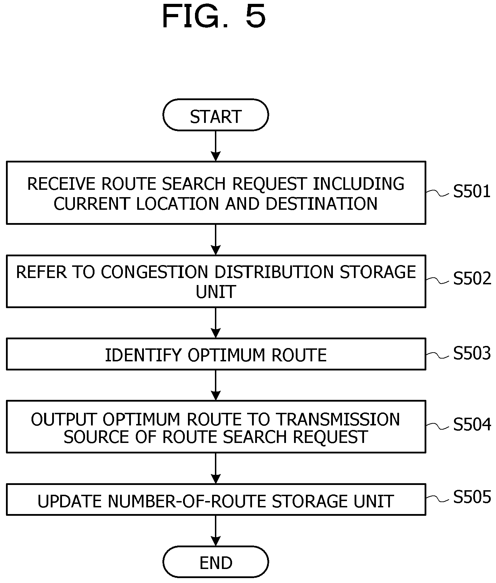

Hereinafter, processing of the information processing apparatus 200 of the present embodiment will be described with reference to FIGs. 5 to 7.

FIG. 5 is a first flowchart illustrating the processing of the information processing apparatus. FIG. 5 illustrates processing of the route guidance unit 230 of the information processing apparatus 200. Whenever the information processing apparatus 200 receives the route search request, the processing of FIG. 5 is executed.

In the route guidance unit 230, the input reception unit 231 receives an input of the route search request including a current location and a destination from the terminal device 300 (step S501).

Subsequently, the route guidance unit 230 causes the route extraction unit 232 to extract candidates for the route from the current location to the destination, and causes the route identification unit 233 to refer to the congestion distribution storage unit 220 (step S502) to identify the optimum route (step S503).

Subsequently, the route guidance unit 230 causes the route output unit 234 to output information indicating the optimum route to the terminal device 300 (step S504).

Subsequently, the route guidance unit 230 causes the number-of-route update unit 235 to update the number-of-route storage unit 210 based on the optimum route output to the terminal device 300 (step S505), and ends the processing.

For example, the number-of-route update unit 235 updates the number-of-route storage unit 210 by incrementing the number of routes of each area including the optimum route output to the terminal device 300 by 1.

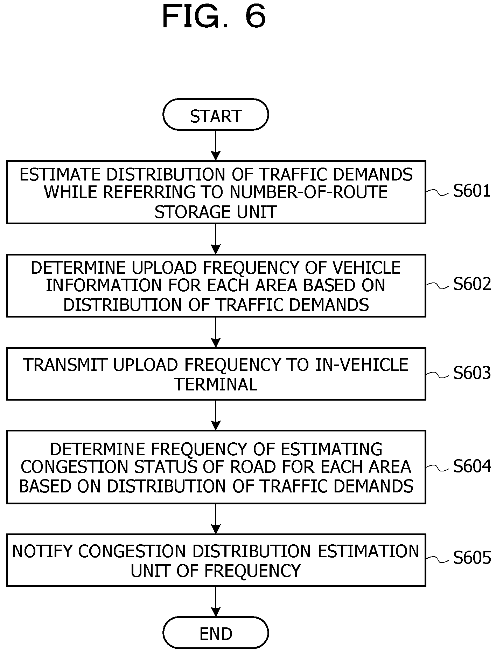

Next, processing of the upload control unit 240 included in the information processing apparatus 200 will be described with reference to FIG. 6. FIG. 6 is a second flowchart illustrating the processing of the information processing apparatus. The processing of FIG. 6 may be executed whenever the number-of-route storage unit 210 is updated, or may be periodically executed for each predetermined period.

The upload control unit 240 of the present embodiment causes the demand estimation unit 241 to estimate the distribution of traffic demands while referring to the number-of-route storage unit 210 (step S601). For example, the upload control unit 240 estimates the magnitude of the traffic demand of each area in accordance with the number of routes counted for each area.

Subsequently, the upload control unit 240 causes the frequency determination unit 242 to determine the upload frequency of the vehicle information for each area based on the magnitude of the traffic demand for each area (step S602).

Subsequently, the upload control unit 240 causes the frequency instruction unit 243 to notify the in-vehicle terminal 400 in each area of the upload frequency (step S603).

The upload control unit 240 determines the frequency of estimating the congestion status of the road in the area in accordance with the magnitude of the traffic demand for each area (step S604).

Subsequently, the upload control unit 240 causes the frequency instruction unit 243 to notify the congestion distribution estimation unit 250 of the frequency of estimating the congestion status for each area (step S605), and ends the processing.

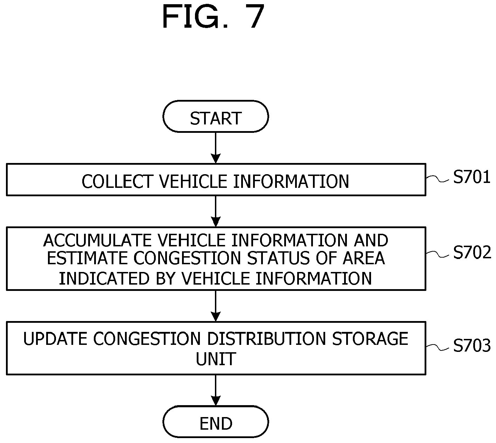

Next, processing of the congestion distribution estimation unit 250 included in the information processing apparatus 200 will be described with reference to FIG. 7. FIG. 7 is a third flowchart illustrating the processing of the information processing apparatus.

The processing of FIG. 7 is processing executed for each area and is executed at the frequency determined by the upload control unit 240. For example, the execution of the processing of FIG. 7 is instructed by the execution control unit 251 in accordance with the frequency for each area notified by the upload control unit 240.

In the information processing apparatus 200, the congestion distribution estimation unit 250 causes the vehicle information collection unit 252 to collect the vehicle information uploaded from the in-vehicle terminal 400 in the area (step S701).

Subsequently, the congestion distribution estimation unit 250 causes the degree-of-congestion calculation unit 253 to estimate the congestion status of the area (step S702). For example, the degree-of-congestion calculation unit 253 may calculate the degree of congestion for each section of the road included in the area, and may estimate the congestion status of the area from the calculated degree of congestion for each section of the road.

Subsequently, the congestion distribution estimation unit 250 causes the congestion distribution update unit 254 to update the congestion distribution storage unit 220 (step S703), and ends the processing.

For example, the congestion distribution update unit 254 reflects the newly calculated degree of congestion of each section of the road in the congestion distribution information stored in the congestion distribution storage unit 220.

In the present embodiment, as described above, the magnitude of the traffic demand is estimated for each area, the upload frequency of the vehicle information and the estimation frequency of the congestion status for each road are set to be high for the area where the traffic demand is large, and the upload frequency and the estimation frequency are set to be low for the area where the traffic demand is small.

Thus, according to the present embodiment, the accuracy of the estimation of the congestion status of the area where the traffic demand is large may be improved while the communication load between the information processing apparatus 200 and the in-vehicle terminal 400 and the processing load of the information processing apparatus 200 are reduced.

Accordingly, according to the present embodiment, the accuracy of the guidance of the optimum route presented to the user may be improved while the communication load and the processing load are reduced.

## Claims

1. A method for determining an upload frequency, the method comprising:
calculating for each area, by a computer, a counted number of routes for routes identified based on route search requests received for a predetermined period in past; and
determining an upload frequency of uploading vehicle information from a terminal associated with a vehicle in each area in accordance with the counted number of routes for each area.

2. The method according to claim 1, further comprising:
determining a frequency of estimating a congestion status in each area in accordance with the counted number of routes for each area.

3. The method according to claim 1 or 2, wherein the upload frequency becomes high as the counted number of routes becomes large.

4. The method according to claim 2 or 3, wherein the frequency of estimating the congestion status becomes high as the counted number of routes becomes large.

5. The method according to any one of claims 2 to 4, further comprising:
estimating the congestion status in each area at a timing corresponding to the frequency of estimating determined for each area.

6. The method according to any one of claims 1 to 5, further comprising:
receiving a route search request; and
identifying a route while referring to a storage unit in which information indicating a congestion status of each area is stored.

7. A program that causes a computer to execute the method according to any one of claims 1 to 6.
